# EUROPÄISCHE PATENTSCHRIFT

(11) **EP 2 948 277 B1**
(45) Veröffentlichungstag und Bekanntmachung des Hinweises auf die Patenterteilung: **16.11.2016**
(21) Anmeldenummer: 14701341.1
(22) Anmeldetag: 21.01.2014
(51) Int. Cl.: B25J 15/06, B65G 47/91

(54) **FLÄCHENSAUGGREIFER**
SUCTION GRIPPER FOR FLAT ARTICLES
VENTOUSE POUR DES ARTICLES PLATS

(30) Priorität: 25.01.2013 DE 102013201248
(43) Veröffentlichungstag der Anmeldung: 02.12.2015
(73) Patentinhaber: J. Schmalz GmbH, 72293 Glatten (DE)
(72) Erfinder: HARTER, Leonhard, 72290 Wittendorf (DE); STEYERL, Ken, 72202 Nagold (DE)
(74) Vertreter: DREISS Patentanwälte PartG mbB
(86) Internationale Anmeldenummer: PCT/EP2014/051089
(87) Internationale Veröffentlichungsnummer: WO 2014/114621

(56) Entgegenhaltungen:
- DE-A1-102005 014 115
- DE-C1- 10 216 221
- US-A- 4 265 476
- US-B2- 7 661 736

## Beschreibung

Die Erfindung betrifft einen Flächensauggreifer zum Ansaugen und Handhaben von Werkstücken, mit einem Gehäuse, in welchem eine mit Unterdruck beaufschlagbare Unterdruckkammer vorgesehen ist und das Gehäuse an seiner dem Werkstück zugewandten Saugseite Saugöffnungen aufweist.

Derartige Flächensauggreifer (DE 10 2006 050 970 A1) dienen insbesondere zum lageweisen Ergreifen und Anheben von Gegenständen, wie beispielsweise lagestabile Flachmaterialien, wie z.B. Bretter oder Platten, oder von kleineren Gegenständen, wie z.B. Dosen, Bechern, Schalen oder dergleichen. Der Flächensauggreifer weist einen flexiblen Belag auf, der üblicherweise an die Oberseite der zu greifenden Gegenstände angelegt wird. Als vorteilhaft hat sich ein Schaumstoffbelag erwiesen, da sich dieser an die mitunter unebene Oberfläche gut anschmiegt. Dabei besteht aber weiterhin das Problem, dass unterschiedliche Gegenstände unterschiedliche Oberflächen aufweisen und mitunter zwischen den Gegenständen große Lücken bestehen.

Das Strömungsverhalten ist bei herkömmlichen Flächensauggreifern aber zu träge, als dass dieser schnell auf unterschiedliche Gegenstände reagieren kann.

Ist der Flächensauggreifer mit Strömungsventilen ausgestattet, dann dürfen die Ventilkörper bei einer vorgegebenen, definierten Saugleistung nicht zu träge sein, da sie ansonsten nicht schließen. Zu schnell reagierende Ventilkörper bergen aber die Gefahr, dass sie auch dann schließen, wenn ein angesaugtes Werkstück z.B. durch Erschütterung kurz abhebt, so dass kurzzeitig Umgebungsluft angesaugt wird. In diesem Fall würde das Werkstück abfallen.

In den Druckschriften DE 36 36 523 C2, DE 198 17 217 C1, US 3 910 621 A und EP 0 267 874 A1 sind Flächensauggreifer beschrieben, bei welchen in der Unterdruckkammer Bauteile angeordnet sind. Die US 7 661 736 B2 zeigt einen Flächensauggreifer mit den Merkmalen des Oberbegriffs des Anspruchs 1.

Der vorliegenden Erfindung liegt daher die Aufgabe zugrunde, einen Flächensauggreifer der eingangs genannten Art dahingehend weiterzubilden, dass auch träge schließende Ventilkörper einsetzbar sind.

Dieser Aufgabe wird mit einem Flächensauggreifer nach Anspruch 1 gelöst.
Weitere Merkmale ergeben sich aus den Unteransprüchen.

Durch das Einschubelement wird erfindungsgemäß die Unterdruckkammer innerhalb des Gehäuses verkleinert und dadurch das Ansprechverhalten des Flächensauggreifers verbessert. Da der Totraum durch das Einschubelement verkleinert wird reagiert jede einzelne Saugöffnung auch bei kleinerem Saugvolumenstrom besser. Es muss nicht ein großer Saugraum evakuiert werden. Eventuell vorhandene Strömungsventile können dadurch in ihrem Schließverhalten träg reagierend ausgeführt werden. Diese Gestaltung der Strömungsventile lässt somit ein sicheres Anheben und Transportieren der Gegenstände zu, ohne dass durch Leckage am angesaugten Gegenstand die Gefahr besteht, dass das Strömungsventil während des Hebevorganges schließt. Die Erfindung sichert somit das Transportieren von Gegenständen mit Leckage bei minimalem Einsatz des Gesamtvolumenstroms.

Ein weiterer Vorteil besteht darin, dass der Flächensauggreifer durch unterschiedliche Einschubelemente an unterschiedliche Einsatzzwecke schnell anpassbar ist, indem lediglich das geeignete Einschubelement in das Gehäuse eingeschoben wird. Dadurch können Funktionen ergänzt oder geändert werden. Der Flächensauggreifer ist nach Art eines Baukastens aufgebaut.

Bei der Erfindung weist das Einschubelement an seiner der Saugseite des Gehäuses zugewandten Unterseite als Nuten ausgebildete Unterdruckkanäle auf. Diese Unterdruckkanäle sind an den Unterdruckerzeuger angeschlossen und bilden mit den Zuleitungen quasi den einzigen, mit den Saugöffnungen verbundenen Totraum. Dessen Volumen hängt lediglich von den Abmessungen der Nuten und der Zuleitungen ab und kann daher sehr klein gehalten werden.

Um zu verhindern, dass Leckagen oder unbelegte Saugöffnungen einen Zusammenbruch des gesamten Unterdrucksystems bewirken, können die Nuten gegeneinander abgedichtet sein. Außerdem können die Nuten selbst über ihre Länge ein oder mehrere Trennstege aufweisen.

Das Gehäuse ist stirnseitig verschließbar und das Einschubelement stirnseitig in das Gehäuse einschiebbar und wieder herausziehbar. Erfindungsgemäß ist das Gehäuse ein Strangpressprofil wobei sich die Nuten in Längsrichtung des Gehäuses bzw. des Profils erstrecken. Die Nuten können also gleich bei der Herstellung des Gehäuses in dieses eingebracht werden, wobei sie an der Innenseite des Saugseite des Gehäuses vorstehen. Wird das Einschubelement in das Gehäuse stirnseitig eingeschoben, dann greifen die Stege in die Nuten des Einschubelements ein.

Bei einer bevorzugten Weiterbildung der Erfindung ist vorgesehen, dass das Einschubelement wenigstens eine Aufnahmekammer z.B. für einen Ejektor oder Mehrstufenejektor, für einen Druckspeicher oder für einen Unterdruckspeicher aufweist. Der Druck- oder Unterdruckspeicher kann direkt im Einschub gebildet werden. Auf diese Weise liegt an den Saugöffnungen sofort ein Unterdruck an und bei Bedarf kann über den im Druckspeicher gespeicherten Überdruck schnell abgeblasen werden. Durch den höheren Druck können somit auch Verschmutzungen effektiv ausgeblasen werden. Eine Weiterbildung sieht vor, dass elektrische Bauteile, wie Ventile, Sensoren, Energiespeicher, Kameras, Steuerungen usw., innerhalb oder am Einschubelement gelagert sind.

Eine vorteilhafte Ausführungsform sieht vor, dass das Einschubelement wenigstens eine Beleuchtungseinrichtung aufweist. Die Beleuchtungseinrichtung beleuchtet den Unterdruckkanal und oder eine oder mehrere Saugöffnungen und scheint von innen nach außen. Mit dem Flächensauggreifen kann also vor dem Aufsetzen auf den zu greifenden Gegenstand die Oberfläche des Gegenstands beleuchtet werden ,was insbesondere in schlecht beleuchteten Arbeitsstätten von großem Vorteil ist. Zusätzlich oder alternativ können im Einschubelement und insbesondere hinter den Saugöffnungen Reflektoren vorgesehen sein. Wird von außen in die Saugöffnungen reingeleuchtet, können Verschmutzungen sehr leicht erkannt werden.

Mit Vorzug sieht die Erfindung weiterhin vor, dass das Einschubelement wenigstens einen Druckluftkanal und/oder Druckluftdüsen aufweist. Über diese Druckluftdüsen können einerseits Verschmutzungen leicht ausgeblasen werden, andererseits dienen diese zum Abblasen des gegriffenen Werkstücks.

Bei einem anderen Ausführungsbeispiel weist das Einschubelement wenigstens eine elektrisch betriebene Pumpe zur Vakuumerzeugung auf. Die Zuleitung für Druckluft und/oder für Unterdruck bei dieser Variante entfallen. Es werden lediglich elektrische Zuleitungen benötigt.

Um diesen Flächensauggreifer zumindest kurzfristig auch ohne eine Ankopplung an das Stromnetz betreiben zu können, weist das Einschubelement wenigstens einen Energiespeicher, z.B. einen Akkumulator auf. Dieser betreibt die elektrische Pumpe und kann später wieder aufgeladen werden.

Weitere Vorteile, Merkmale und Einzelheiten der Erfindung ergeben sich aus den Unteransprüchen sowie der nachfolgenden Beschreibung, in der unter Bezugnahme auf die Zeichnung eine besonders bevorzugte Ausführungsform beschrieben ist. Die in der Zeichnung dargestellten sowie in der Beschreibung und in den Ansprüchen erwähnten Merkmale können jeweils einzeln für sich oder in beliebiger Kombination erfindungswesentlich sein.

In der Zeichnung zeigen:
Figur 1 eine Explosionsdarstellung des erfindungsgemäßen Flächensauggreifers, teilweise aufgeschnitten;
Figur 2 einen Querschnitt durch den Flächensauggreifer; und
Figur 3 einen Längsschnitt II - II gemäß Figur 1 durch den Flächensauggreifer.

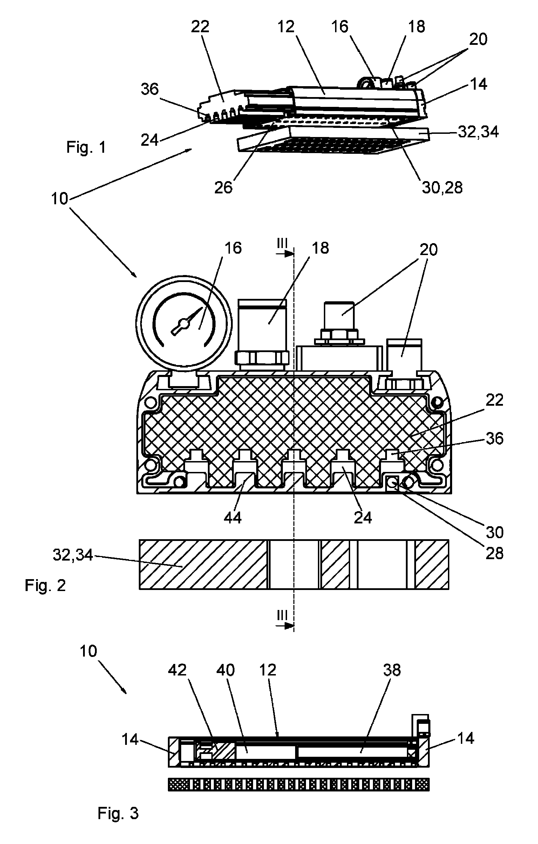

In der Figur 1 ist in perspektivischer Darstellung ein Flächensauggreifer 10 dargestellt, der ein Gehäuse 12 aufweist, welches z.B. ein Abschnitt eines Strangpressprofils ist. Alternativ kann das Gehäuse 12 auch ein Blechbiegeteil, 3D-Druckteil, CFK-Teil oder Gusstel sein. Das Gehäuse 12 ist von zwei Endkappen 14 stirnseitig verschlossen. An der in der Figur 1 dargestellten Endkappe 14 sind ein Manometer 16, ein Druckluftanschluss 18 und sind weitere Anschlüsse 20 erkennbar, die für die Erfindung nicht wesentlich sind. Im Gehäuse 12 befindet sich ein Einschubelement 22, welches den freien Innenraum des Gehäuses 12 verkleinert und sich möglichst dicht an die Innenoberfläche des Gehäuses 12 anschmiegt, jedoch noch so viel Spiel zu dieser besitzt, dass es in das Gehäuse 12 eingeschoben und wieder entfernt, d.h. herausgezogen werden kann. Das Einschubelement 22 weist an seiner Unterseite als Nuten 24 ausgebildete Unterdruckkanäle auf. Korrespondierend zu diesen Nuten 24 besitzt das Gehäuse 12 an seinem Boden 26 mehrere Reihen mit Saugöffnungen 28, die als Strömungswiderstand ausgebildet sind oder zur Aufnahme von Strömungsventilkörpern 30, z.B. Ventilkugeln oder dergleichen, dienen. Am den Boden 26 ist ein flexibler Belag 32, welcher von einer Schaumstoffmatte 34 oder Dichtplatte gebildet wird, befestigt. Diesem Belag 32 ist offenporig ausgebildet oder in diesem Belag 32 sind eine Vielzahl von Schlitzen oder Durchbrüchen eingebracht, die wiederum mit den Saugöffnungen 28 örtlich korrespondieren.

Ferner ist in Figur 2 erkennbar, dass sich an der Innenseite des Bodens 26 Stege 44 erstrecken, in welchen die Saugöffnungen 28 vorgesehen sind und über welche die einzelnen Nuten 24 gegeneinander abgedichtet sind. Oberhalb der Nuten 24 befinden sich Aussparungen 36, in welche z.B. Beleuchtungskörper, Reflektoren, Abblasdüsen und/oder dergleichen eingesetzt werden können. Diese Aussparungen 36 liegen in Verlängerung hinter den Saugkanälen oder Saugöffnungen 28.

Im in der Figur 3 dargestellten Längsschnitt III - III ist das Einschubelement 22 im Gehäuse 12 erkennbar und es ist ein Vakuumerzeuger 38 dargestellt. Dieser Vakuumerzeuger 38 befindet sich in unmittelbarem Anschluss an die Endkappe 14, so dass über diese die Zu- und Ableitungen für Fluide und für elektrische Energie sowie Daten geführt werden können. Das Einschubelement 22 ist als Hohlkörper 40 ausgebildet und dient als Speicher für Druckluft oder als Unterdruckspeicher. In diesem Fall ist der Unterdruckerzeuger direkt in das Einschubelement 22 eingeschoben. Der als Unterdruckspeicher ausgebildete Hohlkörper 40 besitzt eine mit einer Klappe verschließbare Öffnung in Richtung der Strömungsöffnungen 28. Die Klappe kann mit einem Zylinder 42 geöffnet werden, so dass an den Strömungsöffnungen 28 schlagartig ein Unterdruck ansteht. Dies hat insbesondere den Vorteil, dass auch träge reagierende Ventilkörper verwendet werden können. Außerdem kann in das Einschubelement 22 auch ein Speicher als separates Bauteil integriert sein.

## Patentansprüche

1. Flächensauggreifer (10) zum Ansaugen und Handhaben von Werkstücken, mit einem stirnseitig verschließbaren Gehäuse (12), in welchem eine mit Unterdruck beaufschlagbare Unterdruckkammer vorgesehen ist und das Gehäuse (12) an seiner dem Werkstück zugewandten Saugseite Saugöffnungen (28) aufweist, wobei sich im Gehäuse (12) ein in das Gehäuse (12) stirnseitig einschiebbares und wieder herausziehbares Einschubelement (22) befindet, welches den freien Innenraum des Gehäuses (12) verkleinert und von einem Unterdruckerzeuger gespeiste Unterdruckkanäle (24) aufweist, **dadurch gekennzeichnet, dass** das Einschubelement (22) an seiner der Saugseite des Gehäuses (12) zugewandten Unterseite als Nuten (24) ausgebildete Unterdruckkanäle aufweist, wobei die Nuten (24) gegeneinander abgedichtet sind,
und dass das Gehäuse (12) ein Strangpressprofil ist und dass sich die Nuten (24) in Längsrichtung des Gehäuses (12) bzw. des Profils erstrecken,
und dass an der Innenseite der Saugseite des Gehäuses (12) Stege (44) vorgesehen sind, die in die Nuten (24) des Einschubelements (22) eingreifen.

2. Flächensauggreifer nach einem der vorhergehenden Ansprüche, **dadurch gekennzeichnet, dass** das Einschubelement (22) wenigstens eine Aufnahmekammer (38) z.B. für einen Ejektor oder Mehrstufenejektor, für einen Druckspeicher oder für einen Unterdruckspeicher aufweist.

3. Flächensauggreifer nach einem der vorhergehenden Ansprüche, **dadurch gekennzeichnet, dass** das Einschubelement (22) wenigstens eine Beleuchtungseinrichtung aufweist.

4. Flächensauggreifer nach Anspruch 3, **dadurch gekennzeichnet, dass** die Beleuchtungseinrichtung den Unterdruckkanal (24) und oder eine oder mehrere Saugöffnungen (28) beleuchtet.

5. Flächensauggreifer nach einem der vorhergehenden Ansprüche, **dadurch gekennzeichnet, dass** das Einschubelement (22) wenigstens einen Druckluftkanal und/oder Druckluftdüsen aufweist.

6. Flächensauggreifer nach einem der vorhergehenden Ansprüche, **dadurch gekennzeichnet, dass** das Einschubelement (22) wenigstens eine elektrisch betriebene Pumpe zur Vakuumerzeugung aufweist.

7. Flächensauggreifer nach einem der vorhergehenden Ansprüche, **dadurch gekennzeichnet, dass** das Einschubelement (22) wenigstens einen Energiespeicher, z.B. einen Akkumulator, eine integrierte Elektronik zur Auswertung oder Steuerung von Prozessparametern, eine Einrichtung zur Gewichtserkennung, eine Kamera zur Prozess- und Qualitätskontrolle oder zur Prozesssteuerung, eine Schnittstelle zu einem Roboter und/oder Elemente zur Vakuummessung, -steuerung und -regelung aufweist.

## Claims

1. A surface area suction gripper (10) for suction and handling of workpieces, with a housing (12) which can be closed at the front and in which is provided a vacuum chamber which can be supplied with a vacuum, the housing (12) having suction openings (28) on its suction side facing the workpiece, wherein in the housing (12) is located an insert element (22) which can be inserted into the front of the housing (12) and withdrawn again, reduces the free inner space of the housing (12) and has vacuum channels (24) supplied by a vacuum generator, **characterized in that** the insert element (22) comprises on its underside facing the suction side of the housing (12) vacuum channels which are designed as grooves (24), the grooves (24) being sealed with respect to one another,
and **in that** the housing (12) is an extruded profile and that the grooves (24) extend in the longitudinal direction of the housing (12) or of the profile, **in that** on the inner side of the suction side of the housing (12) studs (44) are provided which engage in the grooves (24) of the insert element (22).

2. The surface area suction gripper according to one of the preceding claims, **characterized in that** the insert element (22) comprises at least one receiving chamber (38), for example for an ejector or a multi-stage ejector, for a pressure reservoir or for a vacuum reservoir.

3. The surface area suction gripper according to one of the preceding claims, **characterized in that** the insert element (22) has at least one illumination device.

4. The surface area suction gripper according to claim 3, **characterized in that** the illumination device illuminates the vacuum channel (24) and/or one or more suction openings (28).

5. The surface area suction gripper according to one of the preceding claims, **characterized in that** the insert element (22) has at least one compressed air channel and/or compressed air nozzles.

6. The surface area suction gripper according to one of the preceding claims, **characterized in that** the insert element (22) has at least one electrically operated pump for the generation of a vacuum.

7. The surface area suction gripper according to one of the preceding claims, **characterized in that** the insert element (22) has at least one energy reservoir, e.g. an accumulator, integrated electronics for the evaluation or control of process parameters, a device for the detection of weight, a camera for process and quality assurance or for process control, an interface to a robot and/or elements for vacuum measurement and control.

## Revendications

1. Ventouse de préhension plane (10) servant à attirer par aspiration et à manipuler des pièces, qui présente un boîtier (12) pouvant être fermé frontalement, dans lequel se trouve une chambre à dépression dans laquelle un vide peut être créé et le boîtier (12) comportant des orifices d'aspiration (28) sur sa face d'aspiration tournée vers la pièce, un élément d'insertion (22) pouvant être introduit frontalement dans le boîtier (12) et à nouveau extrait se situant dans le boîtier (12) et réduisant l'espace libre intérieur du boîtier (12) et comprenant des canaux de dépression (24) alimentés par un générateur de vide, **caractérisée en ce que** l'élément d'insertion (22) comprend sur sa face inférieure tournée vers la face d'aspiration du boîtier (12) des canaux de dépression réalisés sous la forme de rainures (24), les rainures (24) étant étanchéifiées les unes par rapport aux autres, et **en ce que** le boîtier (12) est un profilé extrudé et **en ce que** les rainures (24) s'étendent dans la direction longitudinale du boîtier (12) ou du profilé, et **en ce que** des éléments jointifs (44), qui s'insèrent dans les rainures (24) de l'élément d'insertion (22), sont situés sur la face intérieure de la face d'aspiration du boîtier (12).

2. Ventouse de préhension plane selon l'une quelconque des revendications précédentes, **caractérisée en ce que** l'élément d'insertion (22) comprend au moins une chambre de réception (38), par exemple pour un éjecteur ou un éjecteur à étages multiples, pour un accumulateur de pression ou pour un accumulateur de vide.

3. Ventouse de préhension plane selon l'une quelconque des revendications précédentes, **caractérisée en ce que** l'élément d'insertion (22) comprend au moins un dispositif d'éclairage.

4. Ventouse de préhension plane selon la revendication 3, **caractérisée en ce que** le dispositif d'éclairage éclaire le canal de dépression (24) et/ou un ou plusieurs orifices d'aspiration (28).

5. Ventouse de préhension plane selon l'une quelconque des revendications précédentes, **caractérisée en ce que** l'élément d'insertion (22) comprend au moins un canal d'air comprimé et/ou des buses d'air comprimé.

6. Ventouse de préhension plane selon l'une quelconque des revendications précédentes, **caractérisée en ce que** l'élément d'insertion (22) comprend au moins une pompe fonctionnant à l'électricité et destinée à générer un vide.

7. Ventouse de préhension plane selon l'une quelconque des revendications précédentes, **caractérisée en ce que** l'élément d'insertion (22) comprend au moins un accumulateur d'énergie, par exemple un accumulateur, une électronique intégrée destinée à évaluer ou commander des paramètres de processus, un dispositif de détection de poids, une caméra de contrôle de processus et de qualité ou de commande de processus, une interface avec un robot et/ou des éléments de mesure, de commande et de régulation de vide.
